# EUROPEAN PATENT SPECIFICATION

(11) **EP 2 538 413 B1**
(45) Date of publication and mention of the grant of the patent: **28.10.2015**
(21) Application number: 10851315.1
(22) Date of filing: 24.12.2010
(51) Int. Cl.: G11B 27/10, G11B 27/30

(54) **METHOD AND PLAYING DEVICE FOR REALIZING FAST RESPONSE IN MULTIMEDIA FILE CONTROL PROCESS**
VERFAHREN UND WIEDERGABEVORRICHTUNG FÜR SCHNELLE REAKTION BEI EINEM MULTIMEDIADATEISTEUERUNGSVERFAHREN
PROCÉDÉ ET DISPOSITIF DE LECTURE PERMETTANT DE RÉALISER UNE RÉPONSE RAPIDE DANS UN PROCESSUS DE COMMANDE DE FICHIER MULTIMÉDIA

(30) Priority: 13.05.2010 CN 201010174119
(43) Date of publication of application: 26.12.2012
(73) Proprietor: ZTE Corporation, Shenzhen City, Guangdong Province 518057 (CN)
(72) Inventor: CHEN, Youxin, Guangdong Province 518057 (CN); MA, Wei, Guangdong Province 518057 (CN)
(74) Representative: Zerbi, Guido Maria
(86) International application number: PCT/CN2010/080249
(87) International publication number: WO 2011/140811

(56) References cited:
- EP-A2- 1 079 393
- CN-A- 101 106 637
- CN-A- 101 118 552
- CN-A- 101 175 192
- CN-A- 101 819 807
- US-A1- 2007 186 162

## Description

### Technical Field

The present invention relates to the multimedia data processing technology, and in particular, to a method and playing device for realizing fast response in a multimedia file control process.

### Background of the Related Art

With the development of the electronic technology and the software engineering, the multimedia information technology has already gone deeply to all respects of the daily life, and meanwhile, the requirement of the user experience on the multimedia information improves day by day as well. The multimedia playing device changes gradually from large-scale to small-scale and from the home type to the portable type, and the small-scale multimedia playing devices such as MP3, MP4, and mobile phone, etc., replace the traditional large-scale multimedia devices of the home type to a great extent. However, the computing capability and the data-handling capacity of the portable playing devices are comparatively limited. When opening or relocating (that is, re-confirming the beginning time point of the playing in the file playing process) some large multimedia files (for example, files in the format such as MP3, AAC, etc.), there is usually a situation that the response is slow, thus influencing the user experience.

The portable playing device, in order to support the user demand for relocating the multimedia file, needs to create the file playing time index of the multimedia file. The creation process needs to traverse data of all the frames of the whole multimedia file, and costs a long time. The bottleneck influencing the opening and relocation speed of the multimedia files lies in the creation process of the file playing time index. There are two schemes which are adopted extensively at present: first, creating the file playing time index after opening the file, and continuing playing the multimedia file after the file playing time index is created completely. In this first scheme, the speed of opening the file is relatively slow, but the relocation is very fast in the playing process; second, temporarily not creating the file playing time index when opening the file, and then creating the file playing time index when receiving the user demand for relocation; in this second method, opening the file is very fast, but relocating file at the first time needs a longer time. Documents US2007186162A1 and EP1079393A2 are examples of prior art methods and playing devices.

### Summary of the Invention

The technical problem that the present invention requires to solve is to provide a method and playing device for realizing fast response in a multimedia file control process, which realizes fast opening and relocating the multimedia file and fast response speed of the playing device, and improves the user experience.

Aspects of the present invention are defined by the appended claims.

In the related art, the multimedia file playing time index is created in a serial manner, that is, the time consuming process of creating the multimedia file playing time index directly influences the operation process of opening the file or relocating the file; compared with the serial manner in the related art, the parallel processing manner is adopted in the present invention and on the premise of not influencing the operation process of opening the file or relocating the file, it finishes creating the multimedia file playing time index, which can solve the defect that the response time is longer when opening the file or relocating the file in the existing method, realizes fast opening and relocating the multimedia file, especially for the terminal devices such as the mobile phone and the portable media player of which the processor ability is poor, etc., they can respond fast to the operation of the user opening the file or relocating the multimedia file, which has important application value on improving the user experience.

### Brief Description of Drawings

FIG. 1 is a component structure diagram of a playing device for realizing fast response in a multimedia file control process in an embodiment.
FIG. 2 is a flow chart of processing messages of threads when realizing fast response by using a multithreading manner in a multimedia file control process in an embodiment.
FIG. 3 is a flow chart of processing messages of a logic control thread in an embodiment.

### Preferred Embodiments of the Present Invention

The present invention is described in detail with reference to the accompanying drawings and in combination with embodiments hereinafter. It should be illustrated that, in the case of not conflicting, the embodiments in the present application and features in these embodiments can be combined with each other.

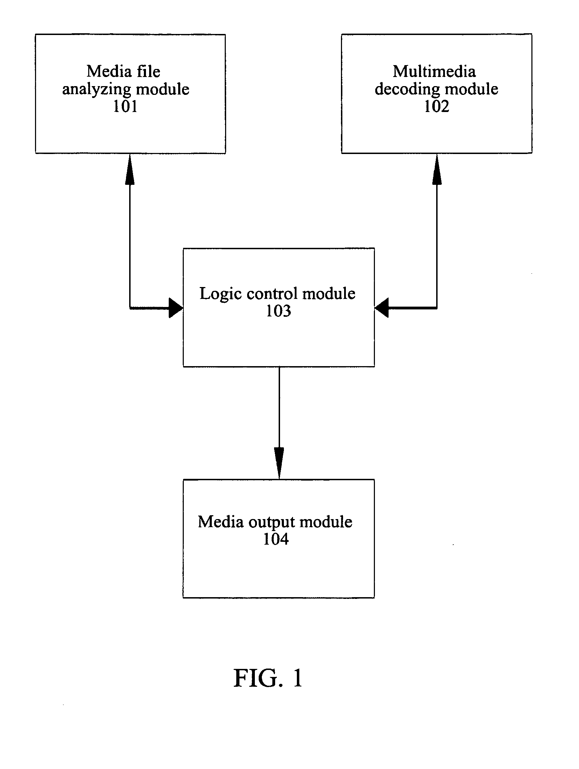

As shown in FIG. 1, the playing device for realizing fast response in a multimedia file control process includes a logic control module, a media file analyzing module connecting with the logic control module, a multimedia decoding module and a media output module.

The logic control module is configured to control the media file analyzing module to create a file playing time index of a multimedia file in a parallel manner at a same time when the multimedia file is opened; the media file analyzing module is configured to create the file playing time index of the multimedia file according to control of the logic control module.

The logic control module is a core control module of the playing device, and the process that a multimedia file is opened by the logic control module includes an initialization process and a process of starting multimedia file playing; and the logic control module is configured to control the media file analyzing module to create the file playing time index of the multimedia file in the initialization process or when starting multimedia file playing. The process of the logic control module performing the initialization is mainly responsible for controlling the media file analyzing module to perform the initialization functions such as analyzing the multimedia file, loading the decoding library dynamically, etc.

The logic control module is further configured to: control the multimedia decoding module to decode the data of the multimedia file, drive the media output module to output the decoded audio and/or video data, and perform the user logic control, such as, starting playing, pause, resuming, relocation, and stopping the playing, etc.

The media file analyzing module is a function support module of the logic control module, and the media file analyzing module is further configured to analyze the multimedia file, which includes analyzing the information, such as the format, size, time length, and the load type of the multimedia file, etc., according to the instruction of the logic control module in the process when the logic control module performs the initialization, and analyze the multimedia file into a data segment with one frame as the unit in the process when the logic control module performs the multimedia playing.

The multimedia decoding module is another function support module of the logic control module, and the multimedia decoding module is responsible for performing the audio and/or video decoding to the data segment of the multimedia file, and decode out the type of data available for output by the media output module.

The media output module is responsible for playing the decoded multimedia audio and/or video data at the speed appointed by the logic control module according to the indication of the logic control module.

In the present embodiment, the logic control module realizes the parallel processing in a multithreading manner. The specific realization manner of the logic control module creating the file playing time index of the multimedia file in the initialization process includes: in the initialization process, the logic control module creating a logic control thread and an index creating thread; in the initialization process, the initialization operation of opening the multimedia file is executed through the logic control thread, and indicating the media file analyzing module to create the file playing time index of the multimedia file by using the index creating thread at the same time; and the media file analyzing module obtaining right to use the index creating thread from the logic control module, and creating the file playing time index of the multimedia file by using the index creating thread according to an indication of the logic control module.

The specific realization manner of the logic control module creating the file playing time index of the multimedia file when starting playing the multimedia file includes: in the initialization process, the logic control module creating a logic control thread and an index creating thread, after finishing an initialization operation of opening the multimedia file through the logic control thread completely, indicating the media file analyzing module to create the file playing time index of the multimedia file by using the index creating thread when starting a playing operation of the multimedia file; and the media file analyzing module obtaining right to use the index creating thread from the logic control module, and creating the file playing time index of the multimedia file by using the index creating thread according to an indication of the logic control module.

The logic control thread created by the logic control module is a master control thread, which is based on the logic control module, the file analyzing module and the multimedia decoding module, and is responsible for controlling the flows, such as the multimedia device management, the file analyzing, the data decoding and the multimedia data output, etc., and the user logic control, such as starting the playing, pause, resuming, relocation, and stop the playing, etc. The index creating thread is a thread which is parallel with the logic control thread, and is dedicated to create the file playing time index by the file analyzing module. The logic control module further creates the media output thread in the initialization process, and the media output thread is also a thread which is parallel with the logic control thread. The media output module is responsible for using the media output thread to play the decoded multimedia audio and/or video data at the speed appointed by the logic control module according to the indication of the logic control module. The above-mentioned three parallel threads can share a storage area, and realize the data sharing, for example, the index creating thread stores the created file playing time index in the storage area, and the logic control thread can judge whether the index is created completely by checking the data of the storage area.

In the process of performing the relocation, after the logic control module receives the relocation indication in the process of playing the multimedia file, when the file playing time index of the multimedia file is already created completely, the logic control module performs the relocation operation according to the file playing time index of the multimedia file.

In order to avoid the problem of the relocation failure caused by the file playing time index of the multimedia file being not created completely yet when performing the relocation, the logic control module, in the initialization process of opening the multimedia file, determines a plurality of preset time points in a range of a time length of the multimedia file; after receiving the relocation indication in the process of playing the multimedia file, when the file playing time index of the multimedia file is not created completely, regards a preset time point which is proximal to a location moment in the relocation indication as a newly confirmed location moment, and performs the relocation operation.

The playing device of the present invention can be the equipment, such as a mobile communication terminal, a portable media player, etc.

Corresponding to the above-mentioned playing device, the method for realizing fast response in a multimedia file control process is: a playing device creating a file playing time index of a multimedia file in a parallel processing manner at a same time when the multimedia file is opened by the playing device..

The process that the playing device opens the multimedia file comprises an initialization process and a process of starting multimedia file playing; the playing device creating the file playing time index of the multimedia file in the parallel processing manner in the initialization process or when starting multimedia file playing.

In an embodiment, the playing device can realize the parallel processing by using a plurality of manners. For example, the background of the playing device is used to create the file playing time index of the multimedia file; also a multithreading manner can be used to realize the parallel processing, and the file playing time index of the multimedia file is created through one of the following manners: in manner one, the playing device creates a logic control thread and an index creating thread in the initialization process; in the initialization process, an initialization operation of opening the multimedia file is executed through the logic control thread, and the file playing time index of the multimedia file is created through the index creating thread at the same time; in manner two, the playing device creates a logic control thread and an index creating thread in the initialization process, and after finishing the initialization operation of opening the multimedia file through the logic control thread, triggers the index creating index to create the file playing time index of the multimedia file when starting the playing operation of the multimedia file.

The above-mentioned manner of creating the file playing time index in the parallel manner of the present invention does not influence the operation process for opening the multimedia file, and increases the open speed of the multimedia file. In addition, for the situation of the relocation operation, after the playing device receives a relocation indication in the process of playing the multimedia file, when the file playing time index of the multimedia file is already created completely, a relocation operation is performed according to the file playing time index of the multimedia file. It can search the already created multimedia playing time index in the present scheme directly, and the relocation operation is performed directly according to the index, which increases the response speed of the device.

In order to avoid the problem of relocation failure caused by the file playing time index of the multimedia file being not created completely yet when performing the relocation, the playing device, in the initialization process of opening the multimedia file, determines a plurality of preset time points in a range of a time length of the multimedia file; after the playing device receives the relocation indication in the process of playing the multimedia file, when the file playing time index of the multimedia file is not created completely, regards a preset time point which is proximal to a location moment in the relocation indication as a newly confirmed location moment, and performs the relocation operation. Wherein, it can adopt a plurality of manners to determine a plurality of preset time points. The total time length can be divided into a plurality of time segments according to the total time length of the multimedia file, and the starting point of each time segment is regarded as the preset time point; the time point with fixed time interval from the starting point of the time of the multimedia file can also be regarded as the preset time point, for example, the preset time points are 30 seconds, 60 seconds, 90 seconds, and 120 seconds, etc.

In the embodiment one, the method for realizing fast response in a multimedia file control process includes the following steps.

In step 1, the user selects the multimedia file, and the player regards the multimedia file as the operation target.

In step 2, the player creates the logic control thread, and performs the initialization procedure of opening the multimedia file.

Specifically, one file channel needs to be opened in the initialization procedure, the information such as the format, type, size, and the time length of the file is analyzed; and it needs to perform the initialization step in the regular operation such as loading the decoding library dynamically etc., in the initialization procedure, and it will not go into detail here.

In step 3, the index creating thread is created in the initialization procedure, and the index creating index is started to create the file playing time index of the multimedia file; the index creating thread and the logic control thread run in parallel.

In other embodiments, it can also judge whether the index needs to be created according to the file type analyzed from the initialization process, that is, when the multimedia file belongs to the file which needs to create the file playing time index (for example the file of the types, such as MP3, AAC, AMR, etc.), it create and start the index creating thread to create the index.

In step 4, according to the audio and/or video type of the analyzed file, it selects to load the corresponding audio and/or video decoding library, and create the media output thread; so far, the initialization process is finished, and it enters the logic control thread message circulation.

In step 5, after the index creating thread creates the multimedia file playing time index completely, the index data are stored in a storage area shared by the threads, and the logic control thread closes the index creating thread.

In step 6, in the playing process, after the player receives the relocation instruction, the logic control thread performs the corresponding relocation operation according to the finished multimedia file playing time index.

In the embodiment two, the method for realizing fast response in a multimedia file control process includes the following steps.

In step 1, the user selects the multimedia file, and the player regards the multimedia file as the operation target.

In step 2, the player creates the logic control thread, and performs the initialization procedure of opening the multimedia file.

Specifically, one file channel needs to be opened in the initialization procedure, the information such as the format, type, size, and the time length of the file is analyzed; and it needs to perform the initialization step in the regular operation such as loading the decoding library dynamically etc., in the initialization procedure, and it will not go into detail here.

In step 3, according to the audio and/or video type of the analyzed file, it selects to load the corresponding audio and/or video decoding library, and create the media output thread; so far, the initialization process is finished, and it enters the logic control thread message circulation.

In step 4,the logic control thread starts playing the multimedia file, and creates and triggers the index creating thread to create the file playing time index of the multimedia file; the index creating thread and the logic control thread run in parallel.

In other embodiments, it can also judge whether the index needs to be created according to the file type analyzed from the initialization process, that is, when the multimedia file belongs to the file which needs to create index (for example the file of the types, such as MP3, AAC, AMR, etc.), it create and start the index creating thread to create the index.

In step 5, after the index creating thread creates the file playing time index completely, the file playing time index data are stored in a storage area shared by the threads, and the logic control thread closes the index creating thread.

In step 6, in the playing process, after the player receives the relocation instruction, the logic control thread performs the corresponding relocation operation according to the finished file playing time index.

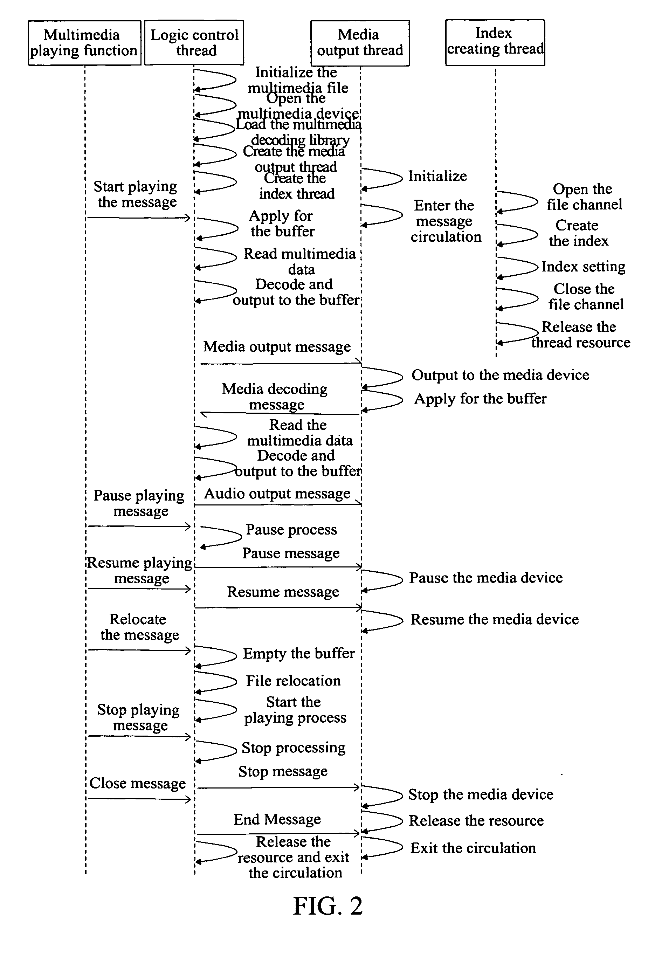

FIG. 2 is a flow chart of processing messages of a thread when realizing fast response by using a multithreading manner in a multimedia file control process. Wherein, it includes the following processes.
Process 1: initialization process.
   The logic control thread enters the message circulation after performing the operations, such as the initialization of the media file, opening the multimedia device, loading the audio and video decoding library, creating the media output thread, creating the index thread creating etc. After the media output thread finishes the initialization process, it enters the message circulation. In the index creating thread, it performs the operations, such as opening the media file, traversing the file to perform the index creating, setting the index data to the current playing file channel, closing the file, and exiting the thread, and these operations and the logic control thread and the media output thread run in parallel.
Process 2: process of starting playing, and this process is divided into the following steps:
   (1), the logic control thread applies for the buffer for the multimedia data after receiving the message of starting the playing;
   (2), the logic control thread reads a segment of data from the multimedia file, performs the audio or video decoding, and then output the data resulted from the decoding to the above-mentioned buffer, and sends the media output message to the media output thread;
   (3), the media output thread outputs the multimedia data to the multimedia device to play after receiving the output message, and then applies for the next data buffer, and send the media decoding message to the logic control thread;
   (4), after the logic control thread receives the decoding message, it transfers to step (2), and it circulates as this.
Process 3: process of pausing playing.
   The logic control thread performs the pausing processing, and sends the pause message to the media output thread, the media output thread pauses the multimedia output device after the media output thread receives the pause message.
Process 4: resuming playing process.
   The logic control thread performs the resuming processing, and sends the resuming message to the media output thread, the media output thread resumes the multimedia output device after the media output thread receives the resuming message.
Process 5: relocation process.
   In the situation that it needs to creates the file playing time index and the file playing time index is created completely, the logic control thread performs emptying the current buffer, performs the relocation according to the requirement appointed by the user, and then performs the starting playing process described in the process 2; in the situation that the file playing time index is not created completely yet, according to the preset time point, it regards a preset time point which is proximal to a location moment in the relocation indication as a newly confirmed location moment, and performs the relocation operation, and then performs the starting playing process described in the process 2.
Process 6: stopping process.
   The logic control thread performs the stopping processing, and sends a stop message to the media output thread, after the media output thread receives the stop message, the media output thread stops the multimedia media, and releases the resources applied in the multimedia playing process.
Process 7: closing process.
   The logic control thread notifies the media output thread to exit the message circulation, and in the situation that the file playing time index is being created and the index thread is not finished, it waits for the index thread to exit, and then exits its own message circulation.

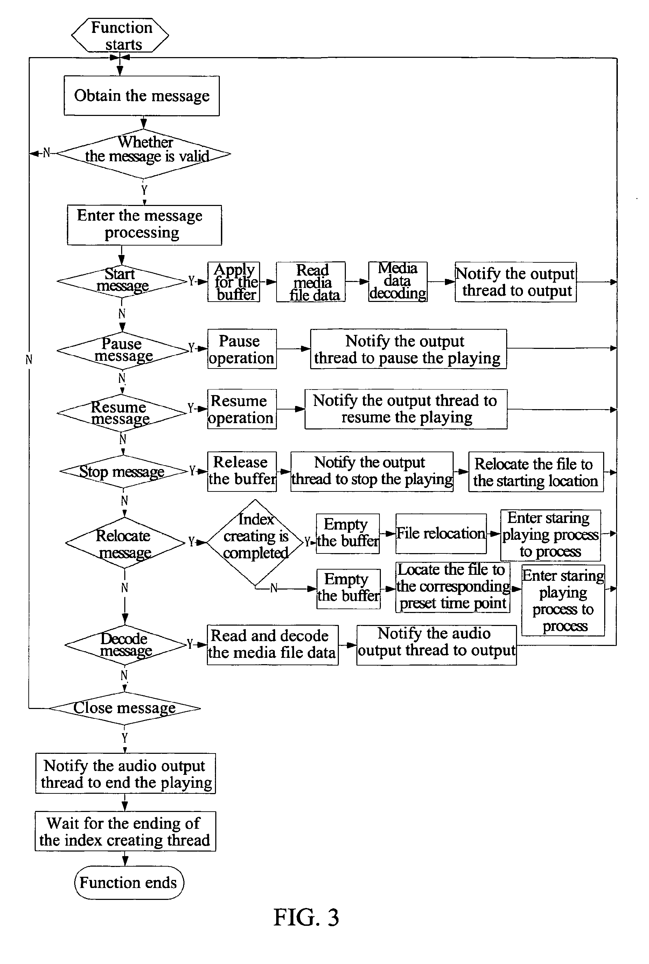

FIG. 3 is a flow chart of processing messages of a logic control thread in an embodiment.

In step 1, the logic control thread waits for the message, and judges the type of the received message. If it is a Start message, then step 2 is transferred; if it is a Pause message, step 3 is transferred; if it is a Resume message, step 4 is transferred; if it is a Stop message, step 5 is transferred; if it is a Seek message, step 6 is transferred; if it is a Decode message, step 7 is transferred; if it is a Close message, step 8 is transferred; if it is not the above-mentioned message type, then the message is abandoned, and it waits to process the new message;
in step 2, the logic control thread applies for the media data buffer, reads data from the multimedia file, and then decodes and outputs the read data to the buffer, and notifies the media output thread to perform output, and step 1 is transferred;
in step 3, the logic control thread performs the pausing processing and notifies the media output thread to pause the playing, and step 1 is transferred;
in step 4, the logic control thread performs the resuming process and notifies the media output thread to resume the playing, and step 1 is transferred;
in step 5, the logic control thread performs the stop process, releases the buffer, notifies the media output thread to stop the playing, and relocates the file to the initial position, and step 1 is transferred;
in step 6, the logic control thread judges whether the current file playing time index is created completely; if the file playing time index is already created completely, then it empties the buffer, relocates the file to the location appointed by the user, and then step 2 is transferred; if the file playing time index is not created completely, it regards a preset time point which is proximal to a location moment in the relocation indication as a newly confirmed location moment, and performs the relocation operation, and then performs the starting playing process described in the process 2, and step 1 is transferred;
in step 7, the logic control thread reads one segment of data from the file, decodes and outputs the data to the buffer, and notifies the media output thread to perform output, and step 1 is transferred;
in step 8, the logic control thread notifies the media output thread to stop the playing, and waits for its exiting; if the index creating thread is not finished, then the exiting index creating sign is set, and it waits for the index creating thread to exit.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limited to any specific form of the combination of the hardware and software.

The above description is only the embodiments of the present invention and is not intended to limit the protection scope of the present invention.

### Industrial Applicability

In the present invention, the parallel processing manner is adopted, and on the premise of not influencing the operation process of opening the file or relocating the file, creating the multimedia file playing time index is finished, which can solve the defect that the response time is long when opening the file or relocating the file in the existing method, realizes fast opening and relocating the multimedia file, especially for the terminal devices such as the mobile phone and the portable media player of which the processor ability is lower, etc., they can respond fast to the operation of the user opening the file or relocating the multimedia file, which has important application value on improving the user experience.

## Claims

1. A method for realizing fast response in a multimedia file control process, comprising:
a playing device creating a file playing time index of a multimedia file in a parallel processing manner at a same time when the multimedia file is opened by the playing device;
wherein, the process that the playing device opens the multimedia file comprises an initialization process and a process of starting multimedia file playing; the step of a playing device creating a file playing time index of a multimedia file in a parallel processing manner at a same time when the multimedia file is opened by the playing device comprises: the playing device creating the file playing time index of the multimedia file in the parallel processing manner in the initialization process or when starting multimedia file playing;
**characterized in that** the playing device realizes the parallel processing in a multithreading manner, and creates the file playing time index of the multimedia file through one of the following manners:
in manner one, the playing device creates a logic control thread and an index creating thread in the initialization process; in the initialization process, an initialization operation of opening the multimedia file is executed through the logic control thread, and the file playing time index of the multimedia file is created through the index creating thread at the same time;
in manner two, the playing device creates a logic control thread and an index creating thread in the initialization process, and after finishing the initialization operation of opening the multimedia file through the logic control thread, triggers the index creating thread to create the file playing time index of the multimedia file when starting the playing operation of the multimedia file.

2. The method according to claim 1, comprising:
after the playing device receives a relocation indication in the process of playing the multimedia file, when the file playing time index of the multimedia file is already created completely, performing a relocation operation according to the file playing time index of the multimedia file.

3. The method according to claim 1, comprising:
the playing device, in the initialization process of opening the multimedia file, determining a plurality of preset time points in a range of a time length of the multimedia file; after the playing device receives the relocation indication in the process of playing the multimedia file, when the file playing time index of the multimedia file is not created completely, regarding a preset time point which is proximal to a location moment in the relocation indication as a newly confirmed location moment, and performing the relocation operation.

4. A playing device for realizing fast response in a multimedia file control process, comprising a logic control module (103) and a media file analyzing module (101), wherein,
the logic control module (103) is configured to control the media file analyzing module (101) to create a file playing time index of a multimedia file in a parallel manner at a same time when the multimedia file is opened;
the media file analyzing module (101) is configured to create the file playing time index of the multimedia file according to control of the logic control module (103);
wherein, the process that the logic control module (103) opens the multimedia file comprises an initialization process and a process of starting multimedia file playing; and
the logic control module (103) is configured to control the media file analyzing module (101) to create the file playing time index of the multimedia file in the initialization process or when starting multimedia file playing;
**characterized in that** the logic control module (103) is configured to control the media file analyzing module (101) to create the file playing time index of the multimedia file in the initialization process alternatively in one of two different manners:
in a first manner, in the initialization process, creating a logic control thread and an index creating thread; in the initialization process, an initialization operation of opening the multimedia file is executed through the logic control thread, and indicating the media file analyzing module (101) to create the file playing time index of the multimedia file by using the index creating thread at the same time;
in a second manner, in the initialization process, creating a logic control thread and an index creating thread, after finishing an initialization operation of opening the multimedia file through the logic control thread completely, indicating the media file analyzing module (101) to create the file playing time index of the multimedia file by using the index creating thread when starting a playing operation of the multimedia file;
the media file analyzing module (101) is configured to create the file playing time index of the multimedia file according to the control of the logic control module (103) as the following manner: obtaining right to use the index creating thread from the logic control module (103), and creating the file playing time index of the multimedia file by using the index creating thread according to an indication of the logic control module (103).

5. The playing device according to claim 4, wherein,
the logic control modul (103) is configured to, after receiving a relocation indication in the process of playing the multimedia file, when the file playing time index of the multimedia file is already created completely, perform a relocation operation according to the file playing time index of the multimedia file.

6. The playing device according to claim 4, wherein,
the logic control module (103) is configured to, in the initialization process of opening the multimedia file, determine a plurality of preset time points in a range of a time length of the multimedia file; after receiving the relocation indication in the process of playing the multimedia file, when the file playing time index of the multimedia file is not created completely, regard a preset time point which is proximal to a location moment in the relocation indication as a newly confirmed location moment, and perform the relocation operation.

## Patentansprüche

1. Ein Verfahren zum Durchführen einer schnellen Reaktion in einem Multimediendateisteuerungsprozess, beinhaltend:
Kreieren eines Dateiwiedergabezeitindex einer Multimediendatei durch eine Wiedergabevorrichtung auf eine parallele Verarbeitungsweise zur selben Zeit wie die Multimediendatei durch die Wiedergabevorrichtung geöffnet wird;
wobei der Prozess des Öffnens der Multimediendatei durch die Wiedergabevorrichtung einen Initialisierungsprozess und einen Prozess des Beginnens des Wiedergebens der Multimediendatei beinhaltet; der Schritt des Kreierens eines Dateiwiedergabezeitindex einer Multimediendatei durch eine Wiedergabevorrichtung auf eine parallele Verarbeitungsweise zur selben Zeit wie die Multimediendatei durch die Wiedergabevorrichtung geöffnet wird, Folgendes beinhaltet: die Wiedergabevorrichtung kreiert den Dateiwiedergabezeitindex der Multimediendatei auf eine parallele Verarbeitungsweise während des Initialisierungsprozesses oder beim Beginnen des Wiedergebens der Multimediendatei;
**dadurch gekennzeichnet, dass** die Wiedergabevorrichtung die parallele Verarbeitung auf eine Multithreading-Weise durchführt und den Dateiwiedergabezeitindex der Multimediendatei durch eine der folgenden Weisen kreiert:
auf Weise eins kreiert die Wiedergabevorrichtung während des Initialisierungsprozesses einen Verknüpfungssteuerungs-Thread und einen Indexkreier-Thread; während des Initialisierungsprozesses wird ein Initialisierungsvorgang des Öffnens der Multimediendatei durch den Verknüpfungssteuerungs-Thread ausgeführt und zur selben Zeit wird der Dateiwiedergabezeitindex der Multimediendatei durch den Indexkreier-Thread kreiert;
auf Weise zwei kreiert die Wiedergabevorrichtung während des Initialisierungsprozesses einen Verknüpfungssteuerungs-Thread und einen Indexkreier-Thread und löst nach dem Beenden des Initialisierungsvorgangs des Öffnens der Multimediendatei durch den Verknüpfungssteuerungs-Thread den Indexkreier-Thread aus, um den Dateiwiedergabezeitindex der Multimediendatei beim Beginnen des Wiedergabevorgangs der Multimediendatei zu kreieren.

2. Verfahren gemäß Anspruch 1, beinhaltend:
nachdem die Wiedergabevorrichtung während des Prozesses des Wiedergebens der Multimediendatei eine Anweisung zur erneuten Lokalisierung empfängt, wenn der Dateiwiedergabezeitindex der Multimediendatei bereits vollständig kreiert ist, Vollziehen eines Vorgangs der erneuten Lokalisierung gemäß dem Dateiwiedergabezeitindex der Multimediendatei.

3. Verfahren gemäß Anspruch 1, beinhaltend:
Bestimmen, durch die Wiedergabevorrichtung, während des Initialisierungsprozesses des Öffnens der Multimediendatei, einer Vielzahl von vorbestimmten Zeitpunkten in einem Bereich einer Zeitlänge der Multimediendatei; nach dem Empfangen der Anweisung zur erneuten Lokalisierung durch die Wiedergabevorrichtung während des Prozesses des Wiedergebens der Multimediendatei, wenn der Dateiwiedergabezeitindex der Multimediendatei nicht vollständig kreiert ist, Betrachten eines vorbestimmten Zeitpunkts, der einem Lokalisierungsmoment in der Anweisung zur erneuten Lokalisierung nahe liegt, als ein neu bestätigter Lokalisierungsmoment und Vollziehen des Vorgangs der erneuten Lokalisierung.

4. Eine Wiedergabevorrichtung zum Durchführen einer schnellen Reaktion in einem Multimediendateisteuerungsprozess, beinhaltend ein Verknüpfungssteuerungsmodul (103) und ein Mediendateianalysiermodul (101); wobei
das Verknüpfungssteuerungsmodul (103) konfiguriert ist, um das Mediendateianalysiermodul (101) zu steuern, um zur selben Zeit wie die Multimediendatei geöffnet wird, auf eine parallele Weise einen Dateiwiedergabezeitindex einer Multimediendatei zu kreieren;
das Mediendateianalysiermodul (101) konfiguriert ist, um den Dateiwiedergabezeitindex der Multimediendatei gemäß der Steuerung des Verknüpfungssteuerungsmoduls (103) zu kreieren;
wobei der Prozess des Öffnens der Multimediendatei durch das Verknüpfungssteuerungsmodul (103) einen Initialisierungsprozess und einen Prozess des Beginnens des Wiedergebens der Multimediendatei beinhaltet; und
das Verknüpfungssteuerungsmodul (103) konfiguriert ist, um das Mediendateianalysiermodul (101) zu steuern, um während des Initialisierungsprozesses oder beim Beginnen des Wiedergebens der Multimediendatei den Dateiwiedergabezeitindex der Multimediendatei zu kreieren;
**dadurch gekennzeichnet, dass** das Verknüpfungssteuerungsmodul (103) konfiguriert ist, um das Mediendateianalysiermodul (101) zu steuern, um während des Initialisierungsprozesses den Dateiwiedergabezeitindex der Multimediendatei wahlweise auf eine von zwei unterschiedlichen Weisen zu kreieren:
auf eine erste Weise, während des Initialisierungsprozesses, Kreieren eines Verknüpfungssteuerungs-Thread und eines Indexkreier-Thread; während des Initialisierungsprozesses wird ein Initialisierungsvorgang des Öffnens der Multimediendatei durch den Verknüpfungssteuerungs-Thread ausgeführt, und Anweisen des Mediendateianalysiermoduls (101), den Dateiwiedergabezeitindex der Multimediendatei durch Verwenden des Indexkreier-Thread zur selben Zeit zu kreieren; auf eine zweite Weise, während des Initialisierungsprozesses, Kreieren eines Verknüpfungssteuerungs-Thread und eines Indexkreier-Thread, nach dem vollständigen Beenden eines Initialisierungsvorgangs des Öffnens der Multimediendatei durch den Verknüpfungssteuerungs-Thread, Anweisen des Mediendateianalysiermoduls (101), den Dateiwiedergabezeitindex der Multimediendatei durch Verwenden des Indexkreier-Thread beim Beginnen eines Wiedergabevorgangs der Multimediendatei zu kreieren;
das Mediendateianalysiermodul (101) konfiguriert ist, um den Dateiwiedergabezeitindex der Multimediendatei gemäß der Steuerung des Verknüpfungssteuerungsmoduls (103) auf die folgende Weise zu kreieren: Erhalten des Rechts zur Verwendung des Indexkreier-Thread von dem Verknüpfungssteuerungsmodul (103) und Kreieren des Dateiwiedergabezeitindex der Multimediendatei unter Verwendung des Indexkreier-Thread gemäß einer Anweisung des Verknüpfungssteuerungsmoduls (103).

5. Wiedergabevorrichtung gemäß Anspruch 4, wobei
das Verknüpfungssteuerungsmodul (103) konfiguriert ist, um nach dem Empfangen einer Anweisung zur erneuten Lokalisierung während des Prozesses des Wiedergebens der Multimediendatei, wenn der Dateiwiedergabezeitindex der Multimediendatei bereits vollständig kreiert ist, einen Vorgang der erneuten Lokalisierung gemäß dem Dateiwiedergabezeitindex der Multimediendatei zu vollziehen.

6. Wiedergabevorrichtung gemäß Anspruch 4, wobei
das Verknüpfungssteuerungsmodul (103) konfiguriert ist, um während des Initialisierungsprozesses des Öffnens der Multimediendatei eine Vielzahl von vorbestimmten Zeitpunkten in einem Bereich einer Zeitlänge der Multimediendatei zu bestimmen; nach dem Empfangen der Anweisung zur erneuten Lokalisierung während des Prozesses des Wiedergebens der Multimediendatei, wenn der Dateiwiedergabezeitindex der Multimediendatei nicht vollständig kreiert ist, einen vorbestimmten Zeitpunkt, der einem Lokalisierungsmoment in der Anweisung zur erneuten Lokalisierung nahe liegt, als einen neu bestätigten Lokalisierungsmoment zu betrachten und den Vorgang der erneuten Lokalisierung zu vollziehen.

## Revendications

1. Une méthode pour réaliser une réponse rapide dans un processus de commande de fichier multimédia, comprenant :
le fait qu'un dispositif de lecture crée un index temporel de lecture de fichier d'un fichier multimédia selon un mode de traitement parallèle en même temps que le fichier multimédia est ouvert par le dispositif de lecture ;
où le processus selon lequel le dispositif de lecture ouvre le fichier multimédia comprend un processus d'initialisation et un processus de lancement de la lecture du fichier multimédia ; l'étape où un dispositif de lecture crée un index temporel de lecture de fichier d'un fichier multimédia selon un mode de traitement parallèle en même temps que le fichier multimédia est ouvert par le dispositif de lecture comprend : le fait que le dispositif de lecture crée l'index temporel de lecture de fichier du fichier multimédia selon le mode de traitement parallèle lors du processus d'initialisation ou au moment du lancement de la lecture du fichier multimédia ;
**caractérisée en ce que** le dispositif de lecture réalise le traitement parallèle selon un mode de traitement multifil, et crée l'index temporel de lecture de fichier du fichier multimédia de l'une des manières suivantes :
manière une, le dispositif de lecture crée un fil de logique de commande et un fil de création d'index lors du processus d'initialisation ; au cours du processus d'initialisation, une opération d'initialisation d'ouverture du fichier multimédia est exécutée via le fil de logique de commande, et l'index temporel de lecture de fichier du fichier multimédia est créé via le fil de création d'index en même temps ;
manière deux, le dispositif de lecture crée un fil de logique de commande et un fil de création d'index lors du processus d'initialisation, et après avoir terminé l'opération d'initialisation d'ouverture du fichier multimédia via le fil de logique de commande, déclenche la création par le fil de création d'index de l'index temporel de lecture de fichier du fichier multimédia au moment du lancement de l'opération de lecture du fichier multimédia.

2. La méthode selon la revendication 1, comprenant :
après réception par le dispositif de lecture d'une indication de relocalisation lors du processus de lecture du fichier multimédia, quand l'index temporel de lecture de fichier du fichier multimédia est déjà créé complètement, le fait d'effectuer une opération de relocalisation suivant l'index temporel de lecture de fichier du fichier multimédia.

3. La méthode selon la revendication 1, comprenant :
le fait que le dispositif de lecture, lors du processus d'initialisation d'ouverture du fichier multimédia, détermine une pluralité de points temporels prédéfinis compris dans une plage d'une durée du fichier multimédia ; après réception par le dispositif de lecture de l'indication de relocalisation lors du processus de lecture du fichier multimédia, quand l'index temporel de lecture de fichier du fichier multimédia n'est pas créé complètement, le fait de considérer un point temporel prédéfini qui est proximal à un moment de localisation dans l'indication de relocalisation comme un moment de localisation nouvellement confirmé, et le fait d'effectuer l'opération de relocalisation.

4. Un dispositif de lecture pour réaliser une réponse rapide dans un processus de commande de fichier multimédia, comprenant un module de logique de commande (103) et un module d'analyse de fichier de contenu multimédia (101) ; dans lequel le module de logique de commande (103) est configuré pour commander le module d'analyse de fichier de contenu multimédia (101) afin de créer un index temporel de lecture de fichier d'un fichier multimédia selon un mode parallèle en même temps que le fichier multimédia est ouvert ;
le module d'analyse de fichier de contenu multimédia (101) est configuré pour créer l'index temporel de lecture de fichier du fichier multimédia suivant la commande du module de logique de commande (103) ;
dans lequel, le processus selon lequel le module de logique de commande (103) ouvre le fichier multimédia comprend un processus d'initialisation et un processus de lancement de la lecture du fichier multimédia ; et
le module de logique de commande (103) est configuré pour commander le module d'analyse de fichier de contenu multimédia (101) afin de créer l'index temporel de lecture de fichier du fichier multimédia lors du processus d'initialisation ou au moment du lancement de la lecture du fichier multimédia ;
**caractérisé en ce que** le module de logique de commande (103) est configuré pour commander le module d'analyse de fichier de contenu multimédia (101) afin de créer l'index temporel de lecture de fichier du fichier multimédia lors du processus d'initialisation selon l'une au choix de deux manières différentes :
première manière, lors du processus d'initialisation, créer un fil de logique de commande et un fil de création d'index ; au cours du processus d'initialisation, une opération d'initialisation d'ouverture du fichier multimédia est exécutée via le fil de logique de commande, et indiquer au module d'analyse de fichier de contenu multimédia (101) de créer l'index temporel de lecture de fichier du fichier multimédia en utilisant le fil de création d'index en même temps ;
deuxième manière, lors du processus d'initialisation, créer un fil de logique de commande et un fil de création d'index, après avoir terminé une opération d'initialisation d'ouverture du fichier multimédia via le fil de logique de commande complètement, indiquer au module d'analyse de fichier de contenu multimédia (101) de créer l'index temporel de lecture de fichier du fichier multimédia en utilisant le fil de création d'index au moment du lancement d'une opération de lecture du fichier multimédia ;
le module d'analyse de fichier de contenu multimédia (101) est configuré pour créer l'index temporel de lecture de fichier du fichier multimédia suivant la commande du module de logique de commande (103) de la manière suivante : obtenir le droit d'utiliser le fil de création d'index du module de logique de commande (103) et créer l'index temporel de lecture de fichier du fichier multimédia en utilisant le fil de création d'index suivant une indication du module de logique de commande (103).

5. Le dispositif de lecture selon la revendication 4, dans lequel,
le module de logique de commande (103) est configuré pour, après réception d'une indication de relocalisation lors du processus de lecture du fichier multimédia, quand l'index temporel de lecture de fichier du fichier multimédia est déjà créé complètement, effectuer une opération de relocalisation suivant l'index temporel de lecture de fichier du fichier multimédia.

6. Le dispositif de lecture selon la revendication 4, dans lequel,
le module de logique de commande (103) est configuré pour, lors du processus d'initialisation d'ouverture du fichier multimédia, déterminer une pluralité de points temporels prédéfinis compris dans une plage d'une durée du fichier multimédia ; après réception de l'indication de relocalisation lors du processus de lecture du fichier multimédia, quand l'index temporel de lecture de fichier du fichier multimédia n'est pas créé complètement, considérer un point temporel prédéfini qui est proximal à un moment de localisation dans l'indication de relocalisation comme un moment de localisation nouvellement confirmé, et effectuer l'opération de relocalisation.
